Europäisches Patentamt

European Patent Office

Office européen des brevets

(11) Veröffentlichungsnummer: **0 207 575**
**A2**

(12) **EUROPÄISCHE PATENTANMELDUNG**

(21) Anmeldenummer: 86201165.7

(22) Anmeldetag: 02.07.86

(51) Int. Cl.⁴: **H04N 7/137**

(30) Priorität: 05.07.85 DE 3524069

(43) Veröffentlichungstag der Anmeldung:
07.01.87 Patentblatt 87/02

(84) Benannte Vertragsstaaten:
DE FR GB

(71) Anmelder: **Philips Patentverwaltung GmbH**
**Billstrasse 80**
**D-2000 Hamburg 28(DE)**
Anmelder: **N.V. Philips' Gloeilampenfabrieken**
**Groenewoudseweg 1**
**NL-5621 BA Eindhoven(NL)**

(72) Erfinder: **Heck, Berthold, Dipl.-Ing.**
**Bürgweg 36**
**D-8500 Nürnberg 30(DE)**

(74) Vertreter: **Peuckert, Hermann et al**
**Philips Patentverwaltung GmbH Billstrasse**
**80 Postfach 10 51 49**
**D-2000 Hamburg 28(DE)**

(54) Anordnung zum prädiktiven Codieren.

(57) Bei der beschriebenen Anordnung zum prädiktiven Codieren, bei der ein Coder den Unterschied codiert, der zwischen den von einer Quelle gelieferten Codeworten und den am Ausgang des Coders anfallenden, durch einen Decoder wieder umcodierten und durch einen Speicher um insgesamt N Worttaktperioden verzögerten Codeworten besteht und bei der die Schreib-Lese-Vorgänge des Speichers von einem mit dem Worttakt getakteten, zyklisch laufenden Adresszähler gesteuert werden, läßt sich ein einfacher Schreib-Lese-Speicher dadurch verwenden, daß der Zähler N-K (N>K) Speicheradressen zyklisch durchläuft, wenn Coder und Decoder zusammen zur Verarbeitung eines Codewortes K (K>O) Worttaktperioden benötigen.

FIG.1

## Anordnung zum prädiktiven Codieren

Die Erfindung betrifft eine Anordnung zum prädiktiven Codieren, bei der ein Coder den Unterschied codiert, der zwischen den von einer Quelle gelieferten Codeworten und den am Ausgang des Coders anfallenden durch einen Decoder wieder umcodierten und durch einen Speicher um insgesamt N Worttaktperioden verzögerten Codeworten besteht, und bei der die Schreib-Lese-Vorgänge des Speichers von einem zyklisch laufenden, mit dem Worttakt getakteten Adresszähler gesteuert werden.

Derartige Anordnungen werden z.B. bei Video-Konferenzsystemen benötigt; sie spielen bei der Bitratenreduktion eine entscheidende Rolle.

Eine skizzenhafte Beschreibung einer Anordnung der genannten Art findet man z.B. in der europäischen Patentanmeldung mit der Veröffentlichungsnummer 0 103 380. Nach dieser Anmeldung werden einem DPCM-Coder mit einem Worttakt die von einer Video-Kamera kommenden PCM-Codeworte zugeführt, die Informationen über Luminanz und Chrominanz der ihnen zugeordneten Bildpunkte enthalten. Mit jedem Codewort von der Video-Kamera wird dem DPCM-Coder auch ein Codewort aus einem Bildspeicher zugeführt, das dem gleichen Bildpunkt zugeordnet ist, jedoch um eine Vollbildperiode zurückliegt. Die PCM-Codeworte die in den Bildspeicher eingeschrieben werden, ergeben sich durch Rückcodierung der DPCM-Codeworte durch einen hierfür vorgesehenen Decodierer. Die bekannte Anordnung stellt eine Codiereinrichtung mit sogenannter Rückwärtsprädiktion dar.

Einschreiben und Auslesen der Codeworte aus dem Bildspeicher läßt sich mit einem einzigen Adresszähler steuern, der mit dem Takt der Codeworte getaktet wird. Der Adresszähler durchläuft zyklisch sämtliche Adressen der Speicherstellen des Bildspeichers, wobei in jeder Speicherstelle immer nur Codeworte gespeichert werden, die einem bestimmten Bildpunkt zugeordnet sind. Steht der Adresszähler auf einer Adresse, so wird während dieser Zeit -also einer Worttaktperiode - das Codewort aus der betreffenden Speicherstelle ausgelesen und anschließend ein neues zum selben Bildpunkt gehörendes Codewort eingeschrieben. Das Auslesen und Einschreiben der zu einem Bildpunkt gehörigen, jedoch um eine Vollbildperiode zeitlich gegeneinander versetzten Codeworte muß -z.B. bei einem Video-Konferenzsystem -innerhalb 400 ns ablaufen. Dies bedeutet unter anderem, daß der Coder und der Decoder das neue Codewort in weniger als 400 ns bestimmt haben müssen. Sind Coder und Decoder nicht derart schnell, sondern benötigen z.B. 3 Worttaktperioden, um das neue Codewort zu bestimmen, ist es bei einem einfach aufgebauten RAM nicht möglich, für alle Codeworte, die einem Bildpunkt zugeordnet sind, immer die gleiche Speicherstelle zu verwenden; vielmehr müßten z.B. zwei Zähler und ein Bildspeicher verwendet werden, bei dem die Zähler voneinander unabhängige Schreib-bzw. Leseprozesse zu steuern hätten. Ein derartiger Speicher wird z.B. in der Schaltungsanordnung zur Umcodierung von Bewegtbildsignalen benötigt, die in der europäischen Patentanmeldung mit der Veröffentlichungsnummer 0 089 919 vorgeschlagen wird. Würde im vorliegenden Fall -also bei-Verzögerung um 3 Worttaktperioden durch Coder und Decoder -ein solcher Bildspeicher verwendet werden, so müßten die beiden Zähler um drei Takte phasenverschoben N Adressen des Bildspeichers zyklisch durchlaufen, wobei der voreilende Zähler des Auslesen und der nacheilende Zähler des Einschreiben steuert und N die Anzahl der zu einem Vollbild gehörenden und abzuspeichernden Codeworte bedeutet. Denkbar ist auch die bloße Verzögerung der Adressen eines Zählers um drei Worttakte und anschließender Steuerung der Schreibprozesse mit den verzögerten Adressen; in jedem Falle wären ein extrem schneller RAM und hochfrequente Takte zur Steuerung erforderlich.

Der Erfindung liegt die Aufgabe zugrunde, eine Schaltungsanordnung der eingangs genannten Art anzugeben, bei der auch dann ein einfacher Schreib-Lese-Speicher (RAM) als Bildspeicher eingesetzt werden kann, wenn die interne Verarbeitungszeit des Coders und Decoders mindestens eine Worttaktperiode lang ist.

Diese Aufgabe wird dadurch gelöst, daß der Zähler N-K (N>K) Speicheradressen zyklisch durchläuft, wenn Coder und Decoder zusammen zur Verarbeitung eines Codewortes K (K>O) Worttaktperioden benötigen.

Eine vorteilhafte Ausgestaltung enthält der Unteranspruch. Anhand der Figuren soll ein Ausführungsbeispiel der Erfindung näher erläutert werden.

Fig. 1 zeigt die wesentlichen Bestandteile einer Codiereinrichtung, wie sie z.B. bei einem Video-Konferenzsystem eingesetzt wird und

Fig. 2 zeigt ein Schema zur Verdeutlichung der Vorgänge in einem Bildspeicher gemäß der Erfindung.

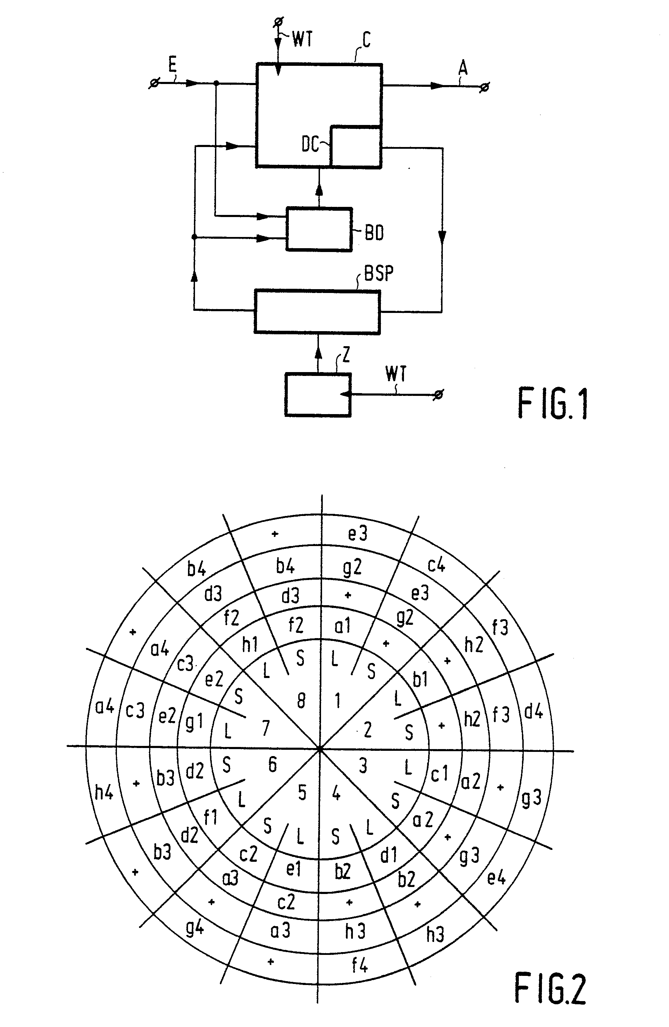

Nach Fig. 1 wird das von einer Video-Kamera kommende Videosignal E in Form von 8-Bit Codeworten parallel dem DPCM-Coder C zugeführt. Jedes informationstragende Codewort enthält den Luminanz-oder Chrominanzwert eines Bildpunktes. Im vorliegenden Beispiel besteht die Information für ein Vollbild aus 286 Zeilen zu je 256 Luminanzwerten, die von 52 Chrominanzwerten durch 4 Füllworte als Pause getrennt sind. Aufeinenderfolgende Zeilen sind durch eine acht identische Füllworte lange Pause getrennt; weitere 26,5 Zeilen -davon 14 Zeilen nach dem ersten Halbbild und 12,5 Zeilen nach dem zweiten Halbbild-bestehen aus identischen Füllworten. Insgesamt ist demnach eine Vollbildperiode 100000 Codeworte lang. Zusätzlich zu diesen Codeworten steht ein Worttakt WT -auch Bildpunkttakt genannt -von 2,5 MHz und ein (in der Fig. 1 nicht angedeutetes) binäres Austastsignal zur Verfügung, das z.B. nur während der Pausen des Videosignales den Binärwert null annimmt. Während der Pausen des Videosignales werden Umschaltungen beim Empfänger und Sender vorgenommen.

Mit einer Flanke des Worttaktes WT wird ein Codewort des Videosignales und das um $N = 100000$ Worttaktperioden zurückliegende, in einem Bildspeicher BSP gespeicherte Codewort in den DPCM-Coder C übernommen, in ein DPCM-Codewort umcodiert und als Ausgangssignal A der weiteren Verarbeitung zugeführt. Parallel dazu wird das DPCM-Codewort durch eine Decoder DC wieder in ein PCM-Codewort rückcodiert; das rückcodierte Codewort unterscheidet sich von dem PCM-Codewort des Videosignales E lediglich durch eventuelle Codierungsfehler. Zwischen Eingabe zweier PCM-Codeworte in den Coder C und der Ausgabe des rückcodierten PCM-Codewortes vergehen bei vorliegendem Schaltungsbeispiel 16 Worttaktperioden. Nach der erfindungsgemäßen Lehre hat ein Adresszähler Z, der die Schreib-und Lesevorgänge steuert und vom Worttakt WT getaktet wird, 99984 Adressen zyklisch zu durchlaufen. Dabei werden bei jedem Zyklus das einem bestimmten Bildpunkt zugeordnete Codewort und das an einer bestimmten Stelle eines Vollbildsignales stehende Füllwort unter einer anderen Adresse abgespeichert.

Das Vorliegen eines Austastsignales -in der Fig. 1 nicht angedeutet -ermöglicht eine etwa 8%-ige Reduzierung des Speicherstellenbedarfs dadurch, daß der Zähler Z durch Unterdrückung der Taktimpulse angehalten wird, wenn das Austastsignal und das um 16 Worttaktperioden verzögerte Austastsignal beide den Binärwert null annehmen. Eine Verknüpfung des verzögerten und nicht verzögerten Austastsignales z.B. mit einem ODER-Gatter, dessen Ausgangssignal anschließend mit dem Taktsignal für den Zähler Z durch ein UND-Gatter verknüpft wird, hat die geforderte Wirkung auf den Zähler Z. Dadurch werden fast nur Codeworte im Bildspeicher gespeichert, die den Bildpunkten zugeordnet sind; die meisten Füllworte werden nicht abgespeichert. Im vorliegenden Beispiel reduziert sich der Speicherbedarf durch diese Maßnahmen auf 91504 Speicherplätze; nur die Adressen dieser Speicherplätze werden vom Zähler Z zyklisch durchlaufen.

Ein Bewegungsdetektor BD, dem die gleichen Codeworte eingegeben werden wie dem Coder C, ist insofern für die Erfindung von Bedeutung, als seine Arbeitsgeschwindigkeit eine zusätzliche Verzögerung im Coder und Decoder erforderlich macht. So ist z.B. die oben angegebene Verzögerung von 16 Worttaktperioden im Coder C und Decoder DC nicht allein auf ihre begrenzte Arbeitsgeschwindigkeit zurückzuführen, sondern es sind im Coder C und Decoder DC zusätzliche Verzögerungsglieder eingefügt, um ihre Arbeitsgeschwindigkeit und die Arbeitsgeschwindigkeit des Bewegungsdetektors BD zu koordinieren.

Der Bewegungsdetektor BD prüft, ob der Unterschied zwischen zwei gleichzeitig eingegebenen Codeworten über einer vereinbarten Schwelle liegt; ist das nicht der Fall, so wird kein DPCM-Codewort generiert und dem Signal A zugefügt.

Um die Vorgänge im Bildspeicher BS zu verdeutlichen, soll nun ein wesentlich einfacheres, allerdings unrealistisches Beispiel näher betrachtet werden' Die Dauer einer Vollbildperiode betrage 11 Worttakte. Die zugehörigen Codeworte mögen aus acht Codeworten, die Informationen von acht Bildpunkten tragen, und aus drei Füllworten bestehen. Alle Codeworte, die z.B. zur ersten Vollbildperiode gehören, sollen durch folgendes Schema symbolisiert werden:

al, bl, cl, dl, el, fl, gl, hl, +, +, +.

Die Symbole mit den Buchstaben stellen die informationstragende Worte, die Kreuze die Füllworte dar; die entsprechenden Worte der zweiten und aller weiteren Vollbildperioden unterscheiden sich nur durch die Ziffern hinter den Buchstaben. Die Verzögerung durch den Coder und Decoder möge zwei Worttaktperioden betragen. Die erforderliche Anzahl der Speicherplätze des Bildspeichers BSP wäre dann 9; dabei ist die mögliche Unterdrückung von Zählimpulsen wegen der Füllworte nicht mit berücksichtigt. Da genau ein Füllwort nicht abgespeichert zu werden braucht, beträgt die endgültige Anzahl der Speicherplätze 8.

Jeder dieser Speicherplätze ist in Fig. 2 durch einen der Kreissektoren 1 bis 8 symbolisiert. Der Zähler Z läuft also zyklisch durch acht Adressen; jeder Zyklus ist in Fig. 2 durch einen Kreisring angedeutet, der erste Zyklus durch den innersten Kreisring und die nächstfolgenden Zyklen durch die weiter außen liegenden Kreisringe. Steht der Zähler Z auf einer der Adressen 1 bis 8, so wird das im Teilsektor L einer Speicherstelle eingetragene Codewort ausgelesen und das im Teilsektor S eingetragene Codewort eingeschrieben.

Als Anfangszustand sei willkürlich der Zustand gewählt, in dem in Speicherstelle 1 das Codewort al, in der Speicherstelle 2 das Codewort bl und schließlich in der Speicherstelle 8 das Codewort hl gespeichert ist.

Beim Auslesen des Codewortes al aus dem Bildspeicher BSP liegt am zweiten Eingang des Coders C das Codewort a2 an. Am Ausgang des Decoders DC liegt -wegen der verzögerten Verarbeitung -ein Füllwort + an, das nun in die Speicherstelle 1 eingeschrieben und anstelle des Codewortes al gespeichert wird. Mit dem nächsten Taktimpuls wird das Codewort bl ausgelesen und stattdessen ein weiteres Füllwort in die Speicherstelle 2 eingeschrieben. Erst mit dem dritten Taktimpuls, mit dem das Codewort cl ausgelesen wird, wird das zum Codewort al um eine Vollbildperiode verzögerte Codewort a2 vom Decoder DC erzeugt und in die Speicherstelle 3 eingeschrieben.

Geht man im Uhrzeigersinn die Sektoren 1 bis 8 der Fig. 2 von innen nach außen spiralförmig durch, so ergibt sich für alle Teilsektoren L und für alle Teilsektoren S die oben angegebene Codewortfolge eines Vollbildes, mit dem Unterschied, daß nur zwei Füllworte auf die Codeworte der Bildpunkte folgen. Der Grund hierfür ist die schon oben erwähnte Unterdrückung von Taktimpulsen mit Hilfe des Austastsignales und des um 2 Worttaktperioden verzögerten Austastsignal. Dadurch wird im vorliegenden Beispiel genau ein Taktimpuls pro Vollbild unterdrückt und somit ein Speicherplatz eingespart.

## Ansprüche

1. Anordnung zum prädiktiven Codieren, bei der ein Coder den Unterschied codiert, der zwischen den von einer Quelle gelieferten Codeworten und den am Ausgang des Coders anfallenden, durch einen Decoder wieder umcodierten und durch einen Speicher um insgesamt N Worttaktperioden verzögerten Codeworten besteht, und bei der die Schreib-Lese-Vorgänge des Speichers von einem mit dem Worttakt getakteten, zyklisch laufenden Adresszähler gesteuert werden,

dadurch gekennzeichnet,

daß der Zähler N-K (N>K) Speicheradressen zyklisch durchläuft, wenn Coder und Decoder zusammen zur Verarbeitung eines Codewortes K (K>O) Worttaktperioden benötigen.

2. Anordnung nach Anspruch 1, dadurch gekennzeichnet, daß ein Gatter die Zufuhr der Zählimpulse an den Adresszähler sperrt, wenn die zu codierende Codewortfolge Pausen enthält, die größer als K Worttaktperioden sind.

FIG.1

FIG.2

PHD 85-333